# EUROPÄISCHE PATENTSCHRIFT

(11) **EP 1 448 886 B1**
(45) Veröffentlichungstag und Bekanntmachung des Hinweises auf die Patenterteilung: **07.02.2007**
(21) Anmeldenummer: 02776695.5
(22) Anmeldetag: 20.09.2002
(51) Int. Cl.: F02M 55/00, F02M 69/46, F16L 19/00

(54) **SICHERUNGSHÜLSE FÜR EINE BRENNSTOFFEINSPRITZANLAGE**
SECURING SLEEVE FOR A FUEL INJECTION SYSTEM
MANCHON DE BLOCAGE POUR SYSTEME D'INJECTION DE COMBUSTIBLE

(30) Priorität: 15.11.2001 DE 10156021
(43) Veröffentlichungstag der Anmeldung: 25.08.2004
(73) Patentinhaber: ROBERT BOSCH GMBH, 70442 Stuttgart (DE)
(72) Erfinder: REITER, Ferdinand, 71706 Markgroeningen (DE)
(74) Vertreter: Körfer, Thomas
(86) Internationale Anmeldenummer: PCT/DE2002/003547
(87) Internationale Veröffentlichungsnummer: WO 2003/046364

(56) Entgegenhaltungen:
- US-A- 4 295 452
- US-A- 5 823 702
- US-B1- 6 276 339

## Beschreibung

### Stand der Technik

Die Erfindung geht aus von einer Brennstoffeinspritzanlage zum Einspritzen von Brennstoff in eine Brennkraftmaschine sowie von einer Vorrichtung zur Verbindung des Brennstoffeinspritzventils mit einer Brennstoffverteilerleitung nach der Gattung des Hauptanspruchs.

Aus der DE 28 29 057 ist eine Brennstoffeinspritzanlage zur Brennstoffversorgung einer gemischverdichteten, fremdgezündeten Brennkraftmaschine in Abhängigkeit von Betriebskenngrößen bekannt. Die Brennstoffeinspritzanlage umfaßt eine metallene Brennstoffverteilerleitung, die über mindestens eine Abzweigleitung mit mindestens einem Brennstoffeinspritzventil in Verbindung steht, wobei die Abzweigleitung als Metallrohr ausgebildet und durch einen Schraubanschluß mit dem Brennstoffeinspritzventil verbunden ist. Als Abzweigleitungswerkstoff dient leicht biegbares Metall. Zwischen dem Schraubanschluß an der Abzweigleitung und dem Brennstoffeinspritzventil ist ein metallener dünnwandiger Balg vorgesehen, durch den ein seitlicher Versatz zwischen dem Ansatzpunkt der Abzweigleitung an der Brennstoffverteilerleitung und der Einbaulage des Brennstoffeinspritzventils ausgeglichen und die vom Brennstoffeinspritzventil ausgehenden Arbeitsgeräusche gedämpft werden.

Nachteilig an der aus der DE 28 29 057 bekannten Brennstoffeinspritzanlage ist, daß die Schraubverbindung nicht gegen ein selbstätiges Lösen gesichert ist. Aufgrund der Vibrationen der Brennkraftmaschine im Betrieb besteht für eine starr mit der Brennkraftmaschine verbundene Schraubverbindung eine erhöhte Gefahr des sich Lösens. Insbesondere bei direkteinspritzenden Brennstoffeinspritzventilen und bei den hierzu notwendigen hohen Drücken ist die Schraubverbindung jedoch sicherheitsrelevant und darf sich keinesfalls lösen. Die bekannte Brennstoffeinspritzanlage bietet keine Lösung für eine gesicherte Schraubverbindung an.

### Vorteile der Erfindung

Die erfindungsgemäße Brennstoffeinspritzanlage mit den kennzeichnenden Merkmalen des Hauptanspruchs hat demgegenüber den Vorteil, daß die Schraubverbindung sich nicht lösen kann. Durch die Sicherungshülse wird die relative Stellung von Überwurfmutter und Gewinde fixiert. Die erfindungsgemäße Sicherung ist auch kostengünstig und ohne Spezialwerkzeug ver- und entriegelbar sowie beliebig oft wiederverwendbar.

Die Überwurfmutter ist an dem Anschlußstutzen angeordnet und der Gegenhalteabschnitt ist an dem Brennstoffeinspritzventil angeordnet und der Gegenhalteabschnitt ist aus Kunststoff an dem Brennstoffeinspritzventil angeformt.

Durch die in den Unteransprüchen aufgeführten Maßnahmen sind vorteilhafte Weiterbildungen und Verbesserungen der im Hauptanspruch angegebenen Brennstoffeinspritzanlage möglich.

Vorteilhafterweise sind die Überwurfmutter und der Gegenhalteabschnitt an ihrem äußeren Umfang als Mehrkant ausgeformt. Insbesondere kann die Überwurfmutter oder der Gegenhalteabschnitt ein Sechskant sein und der andere ein Mehrkannt. Dadurch ist eine exaktere Einstellung des Anzugsdrehmoments der Schraubverbindung möglich, da kleinere Winkelschritte möglich sind. Es reicht hierzu aus, einen Sechskant mit einem Mehrkannt, bevorzugt einem Zwölfkant, zu kombinieren.

Weiterhin ist von Vorteil, daß die Sicherungshülse sich gegen eine Schulter des Brennstoffeinspritzventils und radial nach innen federnde Laschen der Sicherungshülse sich gegen die Überwurfmutter abstützen und die Sicherungshülse axial festlegen.

Die Sicherungshülse kann nicht selbstätig abrutschen, beispielsweise durch die Schwingungen der Brennkraftmaschine im Betrieb.

Die Laschen können auch in eine an der Überwurfmutter oder dem Brennstoffeinspritzventil ausgeformte radiale Nut eingreifen.

Vorteilhaft weist die Sicherungshülse an einem Ende eine Aufweitung auf. Wenn die Sicherhungshülse mit der Aufweitung voran über die Überwurfmutter und den Gegenhalteabschnitt geschoben wird, wird das Aufschieben erleichtert.

### Zeichnungen

Ein Ausführungsbeispiel der Erfindung ist in den Zeichnungen vereinfacht dargestellt und in der nachfolgenden Beschreibung näher erläutert. Es zeigen:
- Fig. 1: einen Schnitt durch ein Ausführungsbeispiel einer erfindungsgemäßen Brennstoffeinspritzanlage in der Schnittebene eines Brennstoffeinspritzventils und eines Anschlußstutzens einer Brennstoffverteilerleitung;
- Fig. 2: einen Detailschnitt im Bereich einer Sicherungshülse, der in der Fig. 1 mit II bezeichnet ist und
- Fig. 3: die Schnittebene III in den Fig. 1 und 2.

### Beschreibung des Ausführungsbeispiels

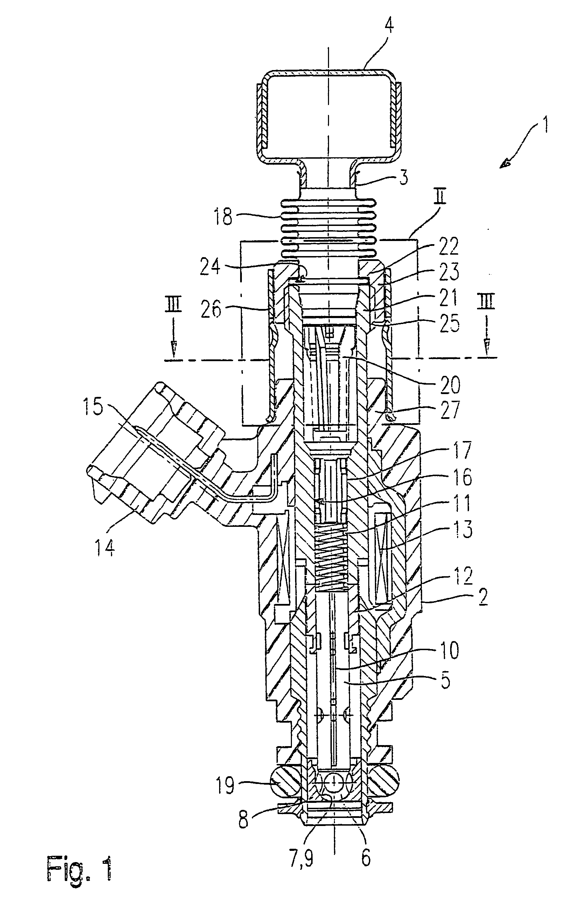

Fig. 1 zeigt einen Schnitt durch ein erstes Ausführungsbeispiel einer erfindungsgemäßen Brennstoffeinspritzanlage 1 in der Schnittebene eines Brennstoffeinspritzventils 2 und eines Anschlußstutzens 3 einer Brennstoffverteilerleitung 4, der aus einem metallischen Faltenbalg 18 gebildet ist. Das Brennstoffeinspritzventil 2 weist eine nach innen öffnenden Ventilnadel 5 mit einem angeformten Ventilschließkörper 6 auf. Der Ventilschließkörper 6 wirkt mit einer Ventilsitzfläche 7, die an einem Ventilsitzkörper 8 angeordnet ist, zu einem Ventildichtsitz 9 zusammen. Durch eine Bohrung 10 der Ventilnadel 5 kann der Brennstoff zu dem Ventildichtsitz 9 zulaufen. Eine Ventilfeder 11 spannt die Ventilnadel 5 und den Ventilschließkörper 6 gegen den Ventildichtsitz 9 vor. In einer Bohrung 16 ist ein Klemmelement 17 angeordnet, über das die Vorspannung der Ventilfeder 11 eingestellt werden kann.

Über einen Anker 12 kann die Ventilnadel 5 aus dem Ventildichtsitz 9 angehoben werden, wenn eine Magnetspule 13 bestromt wird. Durch eine an das Gehäuse des Brennstoffeinspritzventils 2 angeformte Steckverbindung 14 und elektrische Zuleitungen 15 wird der Strom zugeführt.

Über einen O-Ring 19 wird das dem Ventildichtsitz 9 zugewandte Ende des Brennstoffeinspritzventils 2 in einer Bohrung gegenüber einem nicht dargestellten Brennraum oder einem Saugrohr einer Brennkraftmaschine abgedichtet.

In dem Zufluss des Brennstoffs von der Brennstoffverteilerleitung 4 zu- der Ventilnadel 5 ist ein Filterelement 20 angeordnet. Der Faltenbalg 18 ist mit einem entsprechend geformten Endabschnitt in einem Zulaufabschnitt 21 des Brennstoffeinspritzventils 2 eingesetzt und wird durch eine Überwurfmutter 23 gehalten, die mit einem Bund 22 auf eine passend geformte Umbördelung 24 des Faltenbalges 18 drückt. Die Überwurfmutter 23 greift in ein Gewinde 25, das an dem Zulaufabschnitt 21 des Brennstoffeinspritzventils 2 angeformt ist. Eine im Querschnitt dargestellte Sicherungshülse 26 umschließt die Überwurfmutter 23 radial auswärtig, verschiebbar und formschlüssig. In gleicher Weise umschließt die Überwurfmutter 23 einen Gegenhalteabschnitt 27, der an dem Brennstoffeinspritzventil 2 durch Anspritzen eines Kunststoffmaterials ausgeformt ist.

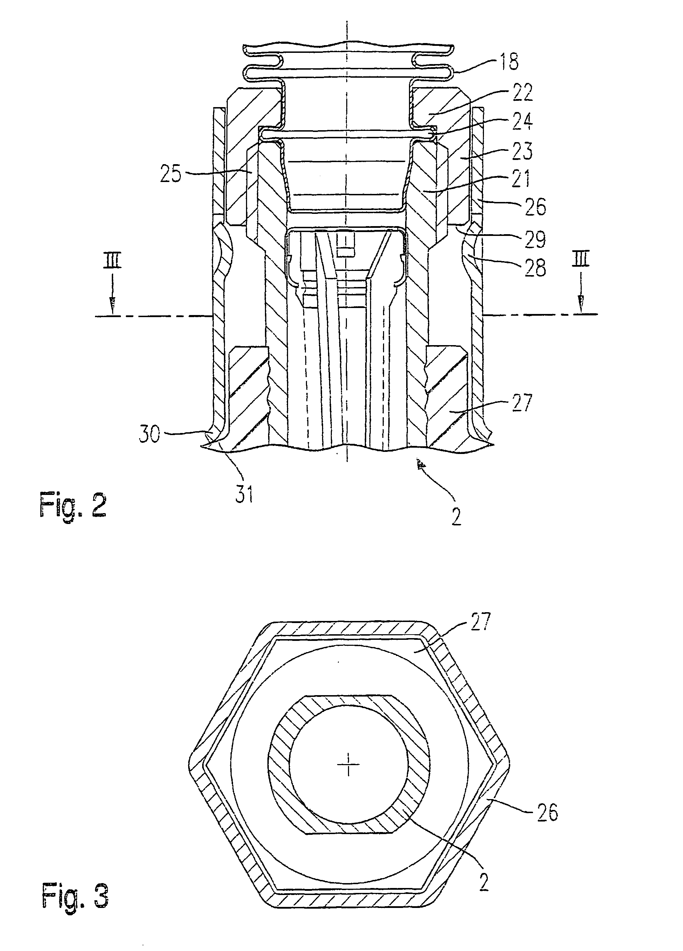

Die erfindungsgemäßen Maßnahmen beziehen sich auf die Verbindung des Anschlußstutzens 3 mit der Brennstoffverteilerleitung 4 sowie die Sicherungshülse 26. Der entsprechende Bereich wird daher nachfolgend anhand der Fig. 2 detaillierter beschrieben.

Fig. 2 zeigt zur Verdeutlichung der Erfindung einen Detailschnitt im Bereich der Sicherungshülse 26, der in der Fig. 1 mit II bezeichnet ist. Der Faltenbalg 18 des nicht weiter dargestellten Anschlußstutzens ist mit einem entsprechenden Endabschnitt in den Zulaufabschnitt 21 des Brennstoffeinspritzventils 2 eingesetzt. Der Faltenbalg 18 wird in dieser Position gehalten, indem der Bund 22 der Überwurfmutter 23 die Umbördelung 24 gegen den Zulaufabschnitt 21 drückt. Die Überwurfmutter 23 greift dabei in das an dem Zulaufabschnitt 21 ausgeformte Gewinde 25 ein. An dem Brennstoffeinspritzventil 2 ist der Gegenhalteabschnitt 27 aus Kunststoff ausgeformt, beispielsweise durch Umspritzen mit Kunstoffmaterial. Die Sicherungshülse 26 liegt formschlüssig an der Überwurfmutter 23 und an dem Gegenhalteabschnitt 27 an. Durch Eigenspannung federnd radial nach innen drückende Laschen 28 liegen an einer axialen Stufung 29 an, die durch das untere Ende der Überwurfmutter 23 gebildet wird. An ihrem dem Brennstoffeinspritzventil 2 zugewandten Ende weist die Sicherungshülse 26 eine Aufweitung 30 auf. Gleichzeitig liegt sie mit diesem Ende an einer Schulter 31 des Brennstoffeinspritzventils 2 an.

Fig. 3 zeigt in Aufsicht die mit III bezeichnete Schnittebene in den Fig. 1 und 2. Die Sicherungshülse 26 umschließt formschlüssig den Gegenhalteabschnitt 27. Innerhalb ist im Querschnitt das Brennstoffeinspritzventil 2 gelegen.

Bei der Montage der Brennstoffeinspritzanlage 1 wird die Überwurfmutter 23 auf das Gewinde 25 mit dem vorgeschriebenen Drehmoment aufgeschraubt. Dabei kann mit einem passenden Werkzeug an dem Gegenhalteabschnitt 27 gegengehalten werden. Sodann wird die Sicherungshülse 26, die bereits zuvor im Bereich des Anschlußstutzens 3 aufgesetzt wurde, Richtung Brennstoffeinspritzventil 2 über die Überwurfmutter 23 aufgeschoben. Dabei wird das Aufschieben durch die Aufweitung 30 der Sicherungshülse 26 erleichtert. Wenn die Überwurfmutter 23 soweit auf dem Gewinde 25 verdreht wird, dass sie eine gleiche oder passende Stellung ihrer äußeren Form zu dem Gegenhalteabschnitt 27 aufweist, kann die Sicherungshülse 26 soweit aufgeschoben werden, bis sie an der Schulter 31 mit ihrem aufgeweiteten Ende 30 anliegt. Damit nur möglichst geringe Verdrehungen der Überwurfmutter 23 auf dem Gewinde 25 und somit Abweichungen vom vorgegebenen Drehmoment nötig sind, kann beispielsweise die Überwurfmutter 23 ein Mehrkant, bevorzugt ein Zwölfkant sein. Bei einem als Sechskant ausgeformten Gegenhalteabschnitt 27 und einer ebenfalls als Sechskant ausgeformten formschlüssig auf diesem sitzenden Sicherungshülse 26 ist somit nur noch eine maximale Verdrehung um 15° und nicht um 30° notwendig, um die Sicherungshülse vollständig aufschieben zu können. Sobald die Sicherungshülse 26 an der Schulter 31 anliegt, federn die Laschen 28 nach innen und verhindern ein Abrutschen der Sicherungshülse 26. Wenn die Sicherungshülse 26 aus ihrer Position nach oben heraus geschoben werden soll, muß zuerst die Federkraft der Laschen 28 überwunden werden, sobald diese an der axialen Stufung 29 anliegen.

In vorteilhaft günstiger einfacher und kostengünstiger Ausführung kann somit eine Sicherung gegen ein Lösen der Schraubverbindung erreicht werden. Insbesondere kann ein Ver- und Entriegeln beliebig oft durchgeführt werden und es ist hierzu kein Spezialwerkzeug erforderlich.

Die Erfindung ist nicht auf das dargestellte Ausführungsbeispiel beschränkt und beispielsweise auch für Brennstoffeinspritzanlagen von direkteinspritzenden und selbstzündenden Brennkraftmaschinen geeignet.

## Patentansprüche

1. Brennstoffeinspritzanlage (1) zum Einspritzen von Brennstoff in eine Brennkraftmaschine mit zumindest einem Brennstoffeinspritzventil (2) und einer Brennstoffverteilerleitung (4), die für jedes Brennstoffeinspritzventil (2) einen mit einem Zulaufabschnitt (21) des Brennstoffeinspritzventils (2) verbindbaren Anschlußstutzen (3) aufweist, wobei der Anschlußstutzen (3) mit dem Brennstoffeinspritzventil (2) über eine Schraubverbindung bestehend aus einer Überwurfmutter (23) und einem Gewinde (25) verbindbar ist,
**dadurch gekennzeichnet,**
**dass** eine Sicherungshülse (26) formschlüssig über die an dem Anschlußstutzen angeordnete Überwurfmutter (23) und einen zur Form passenden am Brennstoffeinspritzventil (2) angeordneten Gegenhalteabschnitt (27) am Brennstoffeinspritzventil (2) schiebbar ist, um ein Verdrehen der Überwurfmutter (26) und des Gewindes (25) relativ zueinander zu verhindern, wobei der Gegenhalteabschnitt (27) ein Teil der Kunststoffumspritzung des Brennstoffeinspritzventils (2) ist.

2. Brennstoffeinspritzanlage nach Anspruch 1,
**dadurch gekennzeichnet,**
**dass** die Überwurfmutter (23) an ihrem äußeren Umfang als Mehrkant ausgeformt ist.

3. Brennstoffeinspritzanlage nach Anspruch 1 oder 2,
**dadurch gekennzeichnet,**
**dass** der Gegenhalteabschnitt (27) an seinem äußeren Umfang als Mehrkant ausgeformt ist.

4. Brennstoffeinspritzanlage nach einem der Ansprüche 2 oder 3,
**dadurch gekennzeichnet,**
**dass** die Überwurfmutter (23) an ihrem äußeren Umfang als Sechskant oder Zwölfkant ausgeformt ist.

5. Brennstoffeinspritzanlage nach einem der Ansprüche 2 bis 4,
**dadurch gekennzeichnet,**
**dass** der Gegenhalteabschnitt (27) an seinem äußeren Umfang als Sechskant oder Zwölfkant ausgeformt ist.

6. Brennstoffeinspritzanlage nach einem der Ansprüche 1 bis 5,
**dadurch gekennzeichnet,**
**dass** die Sicherungshülse (26) radial nach innen federnde Laschen (28) aufweist, die sich gegen zumindest eine axiale Stufung (29) axial abstützen und die Sicherungshülse (26) axial festlegen.

7. Brennstoffeinspritzanlage nach Anspruch 6,
**dadurch gekennzeichnet,**
**dass** die Sicherungshülse (26) sich gegen eine Schulter (31) des Brennstoffeinspritzventils (2) und die Laschen (28) sich gegen die Überwurfmutter (23) abstützen.

8. Brennstoffeinspritzanlage nach Anspruch 6,
**dadurch gekennzeichnet,**
**dass** die Laschen (28) in eine an der Überwurfmutter (23) oder dem Brennstoffeinspritzventil (2) ausgeformte radiale Nut eingreifen.

9. Brennstoffeinspritzanlage nach einem der Ansprüche 1 bis 8,
**dadurch gekennzeichnet,**
**dass** die Sicherungshülse (26) an einem Ende eine Aufweitung (30) aufweist.

## Claims

1. Fuel injection system (1) for injecting fuel into an internal combustion engine having at least one fuel injection valve (2) and having a fuel distributor line (4) which, for each fuel injection valve (2), has a connecting piece (3) which can be connected to a supply section (21) of the fuel injection valve (2), it being possible for the connecting piece (3) to be connected to the fuel injection valve (2) by means of a screw connection composed of a cap nut (23) and a thread (25),
**characterized**
**in that**, in order to prevent the cap nut (23) and the thread (25) from rotating relative to one another, a securing sleeve (26) can be pushed onto the fuel injection valve (2) in a positively locking manner over the cap nut (23), which is arranged on the connecting piece, and over a mating holding section (27) which is arranged on the fuel injection valve (2) and matches said securing sleeve (26) in terms of shape, the mating holding section (27) being a part of the plastic encapsulation of the fuel injection valve (2).

2. Fuel injection system according to Claim 1,
**characterized**
**in that** the cap nut (23) is formed at its outer periphery as a polygon.

3. Fuel injection system according to Claim 1 or 2,
**characterized**
**in that** the mating holding section (27) is formed at its outer periphery as a polygon.

4. Fuel injection system according to one of Claims 2 or 3,
**characterized**
**in that** the cap nut (23) is formed at its outer periphery as a hexagon or dodecahedron.

5. Fuel injection system according to one of Claims 2 to 4,
**characterized**
**in that** the mating holding section (27) is formed at its outer periphery as a hexagon or dodecahedron.

6. Fuel injection system according to one of Claims 1 to 5,
**characterized**
**in that** the securing sleeve (26) has radially inwardly resilient lugs (28) which are supported axially against at least one axial step (29) and axially fix the securing sleeve (26).

7. Fuel injection system according to Claim 6,
**characterized**
**in that** the securing sleeve (26) is supported against a shoulder (31) of the fuel injection valve (2), and the lugs (28) are supported against the cap nut (23).

8. Fuel injection system according to Claim 6,
**characterized**
**in that** the lugs (28) engage in a radial groove which is formed on the cap nut (23) or on the fuel injection valve (2).

9. Fuel injection valve according to one of Claims 1 to 8,
**characterized**
**in that** the securing sleeve (26) has a widened portion (30) at one end.

## Revendications

1. Installation d'injection de carburant (1) pour injecter du carburant dans un moteur à combustion comportant au moins un injecteur de carburant (2) et une conduite de distribution de carburant (4) ayant pour chaque injecteur de carburant (2), un ajutage de raccordement (3) qui peut être relié au segment d'alimentation (21) de l'injecteur de carburant (2), l'ajutage de raccordement (3) étant relié à l'injecteur de carburant (2) par une liaison vissée composée d'un écrou-chapeau (23) et d'un filetage (25),
**caractérisée en ce qu'**
un manchon de blocage (26) est emmanché pour une liaison par la forme par-dessus l'écrou-chapeau (23) équipant l'ajutage de raccordement et un segment de retenue complémentaire (27) ajusté à la forme étant prévu sur l'injecteur de carburant (2), segment sur lequel peut coulisser l'injecteur de carburant (2) pour éviter toute rotation de l'écrou-chapeau (26) et du filetage (25) l'un par rapport à l'autre, le segment d'appui complémentaire (27) étant une partie de la matière plastique injectée de l'injecteur de carburant (2).

2. Installation d'injection de carburant selon la revendication 1,
**caractérisée en ce que**
l'écrou-chapeau (23) a une périphérie extérieure en forme de multipan.

3. Installation d'injection de carburant selon la revendication 1 ou 2,
**caractérisée en ce que**
le segment d'appui complémentaire (27) présente à sa périphérie extérieure une forme de multipan.

4. Installation d'injection de carburant selon l'une des revendications 2 ou 3,
**caractérisée en ce que**
l'écrou-chapeau (23) présente à sa périphérie extérieure une forme de six pans ou de douze pans.

5. Installation d'injection de carburant selon l'une des revendications 2 à 4,
**caractérisée en ce que**
le segment d'appui complémentaire (27) a une périphérie extérieure en forme de six pans ou de douze pans.

6. Installation d'injection de carburant selon l'une des revendications 1 à 5,
**caractérisée en ce que**
le manchon de blocage (26) comporte des pattes (28) élastiques radialement vers l'intérieur et qui s'appuient axialement contre au moins une partie étagée axiale (29) et bloquent axialement le manchon de blocage (26).

7. Installation d'injection de carburant selon la revendication 6,
**caractérisée en ce que**
le manchon de blocage (26) s'appuie contre un épaulement (31) de l'injecteur de carburant (2) et les pattes (28) s'appuient contre l'écrou-chapeau (23).

8. Installation d'injection de carburant selon la revendication 6,
**caractérisée en ce que**
les pattes (28) pénètrent dans une rainure radiale réalisée dans l'écrou-chapeau (23) ou dans l'injecteur de carburant (2).

9. Installation d'injection de carburant selon l'une des revendications 1 à 8,
**caractérisée en ce que**
le manchon de blocage (26) présente une extrémité avec une partie évasée (30).
